# EUROPÄISCHE PATENTSCHRIFT

(11) **EP 3 486 112 B1**
(45) Veröffentlichungstag und Bekanntmachung des Hinweises auf die Patenterteilung: **10.06.2020**
(21) Anmeldenummer: 18201430.8
(22) Anmeldetag: 19.10.2018
(51) Int. Cl.: B60N 2/16, B60N 2/50

(54) **FAHRZEUGSITZ MIT FÜHRUNGSEINRICHTUNG**
VEHICLE SEAT WITH GUIDE UNIT
SIÈGE DE VÉHICULE POURVU DE DISPOSITIF DE GUIDAGE

(30) Priorität: 16.11.2017 DE 102017126944
(43) Veröffentlichungstag der Anmeldung: 22.05.2019
(73) Patentinhaber: GRAMMER AG, 92224 Amberg (DE)
(72) Erfinder: Lorey, Konstantin, 92546 Schmidgaden (DE)
(74) Vertreter: Hannke, Christian

(56) Entgegenhaltungen:
- WO-A1-02/20303
- DE-A1- 2 527 047
- US-A1- 2011 241 391

## Beschreibung

Die Erfindung betrifft einen Fahrzeugsitz mit einem Fahrzeugsitzoberteil, einem Fahrzeugsitzunterteil und einer Führungseinrichtung zum Führen des Fahrzeugsitzoberteils gegenüber dem Fahrzeugsitzunterteil bei einer Auslenkung des Fahrzeugsitzoberteils relativ zu dem Fahrzeugsitzoberteil.

Aus dem Stand der Technik ist eine Vielzahl von derartigen Führungseinrichtungen bekannt, beispielsweise eine Führungseinrichtung in Form eines Parallelogramms, wie es bei sogenannten Parallelogrammfederungen eines Fahrzeugsitzes Einsatz finden.

Bei Parallelogrammfederungen handelt es sich um Vertikalfederungen, wobei bei einer vertikalen Federung des Fahrzeugsitzoberteils gleichzeitig ein Versatz nach vorne oder hinten stattfindet, welcher jedoch nur unter bestimmten Voraussetzungen erwünscht ist.

Ferner zeigt DE 25 27 047 A1 eine Führungseinrichtung, welche abfedernd zwischen einem Oberrahmen und einem Bodenrahmen eines Kraftfahrzeugsitzes angeordnet ist.

Insofern ist es die Aufgabe der Erfindung, einen Fahrzeugsitz mit einer Führungseinrichtung bereitzustellen, welcher die bisher bekannten Parallelogrammfederungen weiterentwickelt und einen Versatz nach hinten oder vorne lediglich unter gewissen Voraussetzungen ermöglicht.

Ein Kerngedanke der Erfindung liegt darin, einen Fahrzeugsitz mit einem Fahrzeugsitzoberteil, einem Fahrzeugsitzunterteil und einer Führungseinrichtung zum Führen des Fahrzeugsitzoberteils gegenüber dem Fahrzeugsitzunterteil bei einer Auslenkung des Fahrzeugsitzoberteils relativ zu dem Fahrzeugsitzunterteil bereitzustellen, wobei
die Führungseinrichtung umfasst:
- Eine erste Anordnung mit einem ersten Hebelelement, einem zweiten Hebelelement und einer Hebelelementverbindung, wobei das erste Hebelelement und das zweite Hebelelement in einer Längsrichtung nach vorne verlaufend angeordnet sind;
- Eine zweite Anordnung mit einem dritten Hebelelement, einem vierten Hebelelement und der Hebelelementverbindung, wobei das dritte Hebelelement und das vierte Hebelelement in einer Längsrichtung nach hinten verlaufend angeordnet sind;
- Eine Stabilisierungseinrichtung mit einem fünften Hebelelement, einem sechsten Hebelelement und einem siebten Hebelelement, welche mittels einer gemeinsamen Schwenkachse schwenkbar verbunden sind;
wobei das fünfte Hebelelement mit dem Fahrzeugsitzoberteil, das sechste Hebelelement mit dem Fahrzeugsitzunterteil und das siebte Hebelelement mit der Hebelelementverbindung schwenkbar verbunden sind.

Erfindungsgemäß umfasst die Führungseinrichtung eine erste Anordnung und eine zweite Anordnung, wobei die jeweiligen Hebelelemente entweder nach vorne oder nach hinten verlaufend angeordnet sind. Eine der Anordnungen ist demnach ähnlich zu der bisher bekannten Parallelogrammanordnung.

Dadurch, dass die Hebelelemente der ersten Anordnung anders verlaufen als die Hebelelemente der zweiten Anordnung, wird erreicht, dass der Versatz des Fahrzeugsitzoberteils nach hinten bzw. vorne ausgeglichen wird und die Führungseinrichtung lediglich eine Bewegung des Fahrzeugsitzoberteils in vertikaler Richtung ermöglicht.

Da jedoch eine Führungseinrichtung mit der ersten Anordnung und der zweiten Anordnung an sich unterbestimmt wäre, ist es notwendig, eine Stabilisierungseinrichtung vorzusehen, wie erfindungsgemäß dargestellt.

Da die Bewegung des Fahrzeugsitzoberteils relativ zu dem Fahrzeugsitzunterteil mittels der Führungseinrichtung realisiert werden soll, ist es notwendig, dass die Stabilisierungseinrichtung mit jedem dieser Elemente verbunden ist, das heißt sowohl mit dem Fahrzeugsitzoberteil, dem Fahrzeugsitzunterteil und der Führungseinrichtung.

Erfindungsgemäß weist die Führungseinrichtung daher drei Hebelelemente auf, welche entsprechend angeordnet sind.

Gemäß einer bevorzugten Ausführungsform sind das erste Hebelelement mittels einer ersten Schwenkachse und das zweite Hebelelement mittels einer zweiten Schwenkachse mit dem Fahrzeugsitzunterteil schwenkbar verbunden und das dritte Hebelelement mittels einer dritten Schwenkachse und das vierte Hebelelement mittels einer vierten Schwenkachse schwenkbar mit dem Fahrzeugsitzoberteil verbunden.

Gemäß einer weiteren bevorzugten Ausführungsform sind das zweite Hebelelement, das vierte Hebelelement und die Hebelelementverbindung mittels einer sechsten Schwenkachse und das erste Hebelelement, das dritte Hebelelement und die Hebelelementverbindung mittels einer fünften Schwenkachse schwenkbar verbunden, wobei das siebte Hebelelement an der sechsten Schwenkachse schwenkbar angeordnet ist.

Die Hebelelementverbindung ist insgesamt als ein Bauteil der ersten Anordnung und der zweiten Anordnung anzusehen. Ein derartiges Element ist notwendig, da die Hebelelementverbindung für die erste Anordnung und die zweite Anordnung virtuell die Rolle des Fahrzeugsitzoberteils bzw. des Fahrzeugsitzunterteils übernimmt.

Gemäß der oben aufgezeigten Ausführungsform ist es die Schlussfolgerung, dass die Hebelelementverbindung sowohl mit den Hebelelementen der ersten Anordnung als auch mit den Hebelelementen der zweiten Anordnung schwenkbar verbunden ist.

Auch deshalb ist es vorgesehen, dass die Stabilisierungseinrichtung mit der Hebelelementverbindung schwenkbar verbunden sein muss.

Gemäß einer weiteren bevorzugten Ausführungsform ist das fünfte Hebelelement mittels der dritten Schwenkachse mit dem Fahrzeugsitzoberteil schwenkbar verbunden. Hierdurch ist die Anordnung der Stabilisierungseinrichtung noch näher beschrieben.

Gemäß einer weiteren bevorzugten Ausführungsform kann die Anordnung der Stabilisierungseinrichtung noch näher beschrieben werden, indem das sechste Hebelelement mittels einer siebten Schwenkachse schwenkbar mit dem Fahrzeugsitzunterteil verbunden ist.

Gemäß einer weiteren bevorzugten Ausführungsform ist eine Federungseinheit zum Federn der Auslenkung des Fahrzeugsitzoberteils vorgesehen, welche vorzugsweise mit dem Fahrzeugsitzoberteil und dem Fahrzeugsitzunterteil verbunden ist.

Weiter ist es ebenso denkbar, dass eine Dämpfungseinheit zum Dämpfen der Auslenkung des Fahrzeugsitzoberteils vorgesehen ist.

Grundsätzlich ist auch ebenso von verschiedenen Positionen des Fahrzeugsitzes auszugehen, insbesondere existieren eine nicht-ausgelenkte Position sowie eine ausgelenkte Position. Unter einer nicht-ausgelenkten Position ist eine Position der Führungseinrichtung zu verstehen, bei welcher keine äußere Kraft auf die Führungseinrichtung bzw. den Fahrzeugsitz einwirkt, das heißt, dass keine Auslenkung des Fahrzeugsitzoberteils durchgeführt wird. Entsprechend ist unter einer ausgelenkten Position eine Position der Führungseinrichtung zu verstehen, bei welcher das Fahrzeugsitzoberteil gegenüber dem Fahrzeugsitzunterteil ausgelenkt wurde.

Weiter ist von besonderem Interesse die maximale bzw. minimale Auslenkung des Fahrzeugsitzoberteils relativ zum Fahrzeugsitzunterteil, wobei diese Positionen auch als maximal ausgelenkte Position und minimal ausgelenkte Position bezeichnet sein können.

Gemäß einer bevorzugten Ausführungsform ist in der nicht-ausgelenkten Position des Fahrzeugsitzoberteils in einer Höhenrichtung gesehen die dritte Schwenkachse über der ersten Schwenkachse und die vierte Schwenkachse über der zweiten Schwenkachse angeordnet.

Insbesondere ist der Abstand der ersten Schwenkachse zu der dritten Schwenkachse gleich dem Abstand der zweiten Schwenkachse zu der vierten Schwenkachse, in der nicht-ausgelenkten Position.

Gemäß einer weiteren bevorzugten Ausführungsform ist die siebte Schwenkachse in Längsrichtung gesehen zwischen der ersten Schwenkachse und der zweiten Schwenkachse angeordnet.

Hierdurch ist es möglich, die Längen der Hebelelemente, insbesondere die Längen zwischen den jeweiligen Schwenkachsen der Hebelelemente, der Stabilisierungseinrichtung zu reduzieren.

Besonders bevorzugt ist es gemäß einer Ausführungsform, dass die Hebelelementverbindung derart ausgebildet ist, dass die Hebelelementverbindung durch die Auslenkung des Fahrzeugsitzoberteils in seiner Länge veränderbar ist.

Durch eine derartige Ausgestaltung verändert sich die Führung durch die Führungseinrichtung, so dass nicht nur mehr eine vertikale Bewegung möglich ist, sondern gleichzeitig eine Rotation des Fahrzeugsitzoberteils durchgeführt wird, so dass Fahrzeugsitzoberteil und Fahrzeugsitzunterteil einen Winkel zueinander einschließen, welcher kleiner ist als 180°. Es kann daher eine zweidimensionale Federung erreicht werden, einerseits in vertikaler Richtung und eine rotativ wirkende Längshorizontalfederung.

Gemäß einer alternativen Ausführungsform ist es bevorzugt, dass das fünfte Hebelelement derart ausgebildet ist, dass das fünfte Hebelelement durch die Auslenkung des Fahrzeugsitzoberteils in seiner Länge veränderbar ist.

Durch diese alternative Ausführungsform wird ein Versatz des Fahrzeugsitzoberteils in Längsrichtung erreicht. Es kann daher ebenso eine zweidimensionale Federung erreicht werden, einerseits in vertikaler Richtung und eine translatorisch wirkende Längshorizontalfederung.

Beispielsweise kann die Hebelelementverbindung oder das fünfte Hebelelement als ein Dämpferelement ausgebildet sein.

Weitere Ziele, Merkmale und Anwendungsmöglichkeiten der vorliegenden Erfindung ergeben sich aus der beiliegenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: Fahrzeugsitz mit einer Führungseinrichtung;
- Fig. 2A: Führungseinrichtung gemäß einer Ausführungsform in einer nicht-ausgelenkten Position;
- Fig. 2B: die Führungseinrichtung gemäß Figur 2A in einer maximal ausgelenkten Position;
- Fig. 2C: die Führungseinrichtung gemäß Figur 2A in einer minimal ausgelenkten Position;
- Fig. 3: die Führungseinrichtung gemäß Figur 2A in einer perspektivischen Ansicht;
- Fig. 4: die Führungseinrichtung in einer weiteren Ausführungsform;
- Fig. 5A: Führungseinrichtung gemäß einer weiteren Ausführungsform in einer nichtausgelenkten Position;
- Fig. 5B: die Führungseinrichtung gemäß Figur 5A in einer maximal ausgelenkten Position;
- Fig. 5C: die Führungseinrichtung gemäß Figur 5C in einer minimal ausgelenkten Position;
- Fig. 6A: Führungseinrichtung gemäß einer weiteren Ausführungsform in einer nichtausgelenkten Position;
- Fig. 6B: die Führungseinrichtung gemäß Figur 6A in einer maximal ausgelenkten Position;
- Fig. 6C: die Führungseinrichtung gemäß Figur 6A in einer minimal ausgelenkten Position.

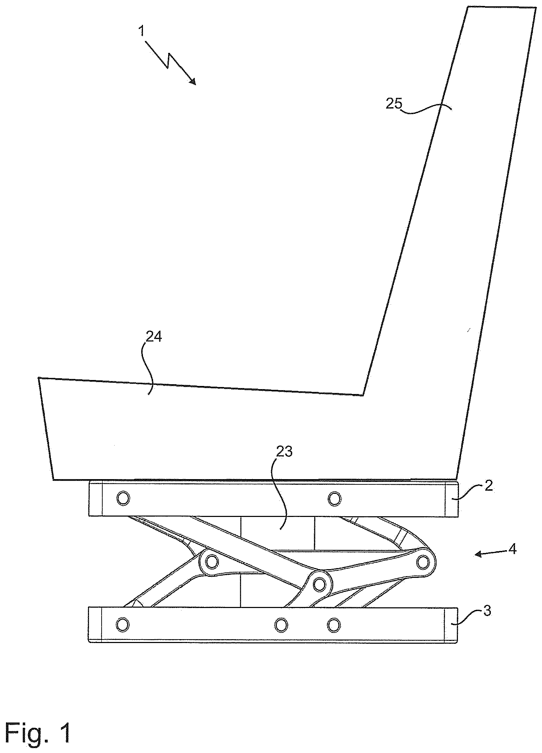

In der Figur 1 ist ein Fahrzeugsitz 1 gezeigt, mit einem Fahrzeugsitzoberteil 2 und einem Fahrzeugsitzunterteil 3, wobei auf dem Fahrzeugsitzoberteil 2 ein Sitzteil 24 und eine mit dem Sitzteil 24 verbundene Rückenlehne 25 angeordnet sind.

Weiter ist eine mit dem Fahrzeugsitzoberteil 2 und dem Fahrzeugsitzunterteil 3 verbundene Führungseinrichtung 4 zu erkennen, wobei weiter bevorzugt ebenso eine Federungseinheit 23 zu erkennen ist, die ebenso mit dem Fahrzeugsitzoberteil 2 und dem Fahrzeugsitzunterteil 3 verbunden ist.

Auf die genauere Ausgestaltung der Führungseinrichtung 4 wird in den nachfolgenden Figuren näher eingegangen.

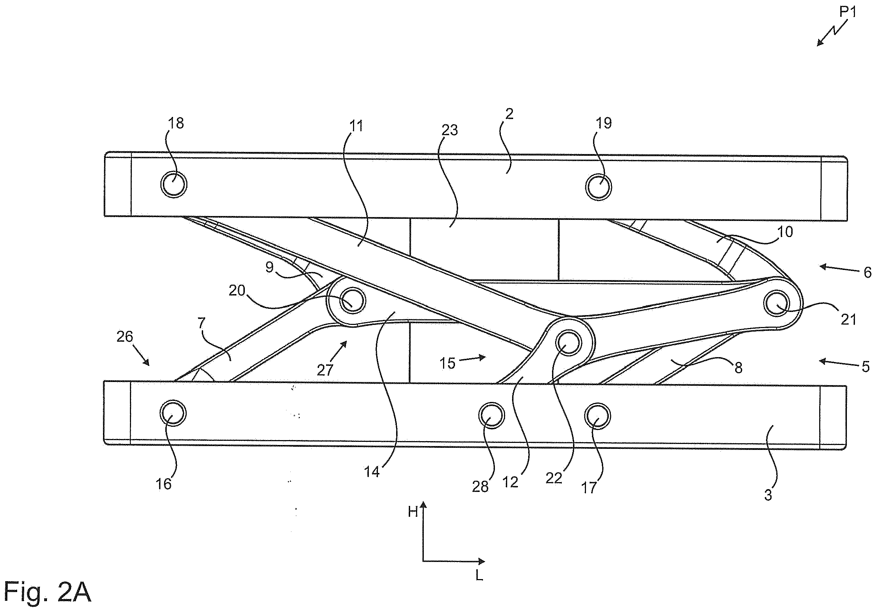

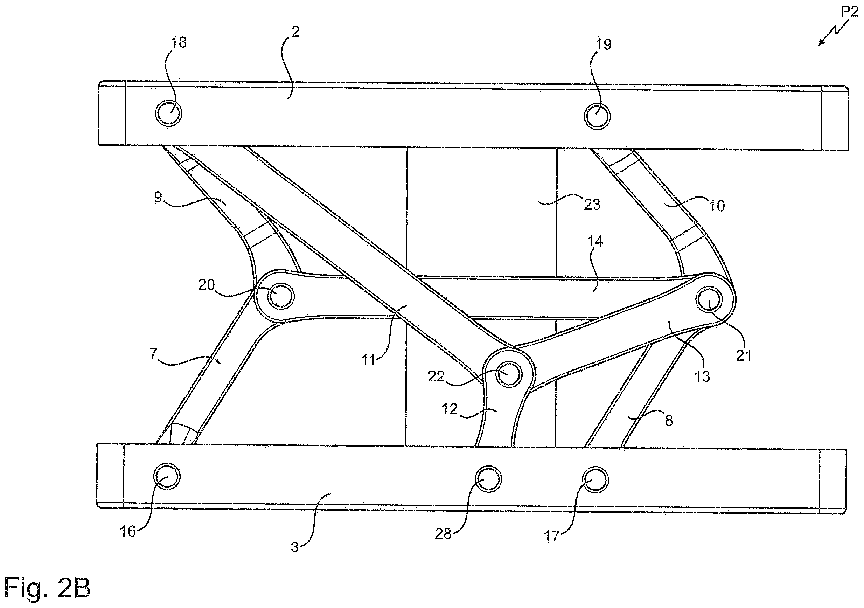

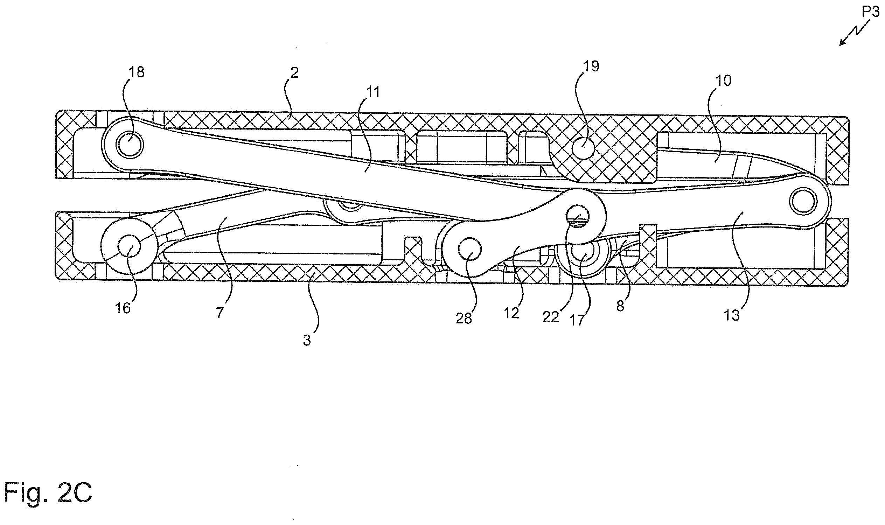

Die Figuren 2A bis 2C zeigen dabei schematisch die Führungseinrichtung 4 gemäß einer ersten Ausführungsform, wobei die Figur 2A die Führungseinrichtung 4 in einer nicht-ausgelenkten Position P1, die Figur 2B eine maximal ausgelenkte Position P2 und die Figur 2C eine minimal ausgelenkte Position P3 zeigt.

Insbesondere zu erkennen sind die erste Anordnung 5 und die zweite Anordnung 6, wobei die erste Anordnung 5 ein in Längsrichtung L nach vorne verlaufendes erstes Hebelelement 7 und ein in Längsrichtung L nach vorne verlaufendes zweites Hebelelement 8 sowie eine Hebelelementverbindung 14 aufweist, und wobei die zweite Anordnung 6 ein in Längsrichtung L nach hinten verlaufendes drittes Hebelelement 9 und ein in Längsrichtung nach hinten verlaufendes drittes Hebelelement 10 aufweist.

Weiter ist eine erfindungsgemäße Stabilisierungseinrichtung 15 zu erkennen, welche ein fünftes Hebelelement 11, ein sechstes Hebelelement 12 und ein siebtes Hebelelement 13 aufweist.

Dabei gilt für die Hebelelemente 7, 8, 9, 10, 11, 12, 13 jeweils, dass jedes Hebelelement einen ersten Endbereich 26 und einen zweiten Endbereich 27 aufweist, wobei jeder dieser Endbereiche 26, 27 mit einer zugehörigen Schwenkachse verbunden ist, wie insbesondere den Figuren zu entnehmen ist. In den Figuren sind die Endbereiche 26, 27 exemplarisch nur für ein Hebelelement dargestellt. Weiter sind die Hebelelemente 7, 8, 9, 10, 11, 12, 13 jeweils länglich ausgebildet.

Genauer sind die Hebelelemente 7, 8, 9, 10, 11, 12, 13 wie folgt angeordnet: Das erste Hebelelement 7 ist mittels einer ersten Schwenkachse 16 und das zweite Hebelelement 8 mittels einer zweiten Schwenkachse 17 mit dem Fahrzeugsitzunterteil 3 schwenkbar verbunden. Weiter ist das dritte Hebelelement 9 mittels einer dritten Schwenkachse 18 und das vierte Hebelelement 10 mittels einer vierten Schwenkachse 19 mit dem Fahrzeugsitzoberteil 2 schwenkbar verbunden.

Weiter sind das zweite Hebelelement 8, das viere Hebelelement 10 und die Hebelelementverbindung 14 mittels einer sechsten Schwenkachse 21 schwenkbar verbunden, wobei das erste Hebelelement 7, das dritte Hebelelement 9 und die Hebelelementverbindung 14 mittels einer fünften Schwenkachse 20 schwenkbar verbunden sind.

Weiter sind das fünfte Hebelelement 11, das sechste Hebelelement 12 und das siebte Hebelelement 13 mittels einer gemeinsamen Schwenkachse 22 miteinander schwenkbar verbunden. Darüber hinaus ist das sechste Hebelelement 12 mittels einer siebten Schwenkachse 28 schwenkbar mit dem Fahrzeugsitzunterteil verbunden.

Auch ist das siebte Hebelelement 13 an der sechsten Schwenkachse 21 schwenkbar angeordnet.

Wie in der Figur 2A zu erkennen ist, befindet sich die Führungseinrichtung 4 in der nicht-ausgelenkten Position P1, das heißt, dass keine äußere Kraft auf den Fahrzeugsitz 1 bzw. das Fahrzeugsitzoberteil 2 wirkt, welche eine Auslenkung des Fahrzeugsitzoberteils 2 gegenüber dem Fahrzeugsitzunterteils 3 bewirken würde.

Vorzugsweise sind das erste Hebelelement 7 und das zweite Hebelelement 8 in Längsrichtung L nach vorne verlaufend angeordnet und ebenso parallel zueinander. Parallel ist hierbei derart zu verstehen, dass die Verbindungslinie zwischen der ersten Schwenkachse 16 und der fünften Schwenkachse sowie die Verbindungslinie zwischen der zweiten Schwenkachse 17 und der sechsten Schwenkachse 21 parallel zueinander ausgebildet sind. Analog gilt dies ebenso für das dritte Hebelelement 9 und das vierte Hebelelement 10 mit den entsprechenden Schwenkachsen 18, 19, 20, 21.

Weiter vorzugsweise ist die Verbindungslinie zwischen der fünften Schwenkachse 20 und der sechsten Schwenkachse 21 parallel zu der Verbindungslinie zwischen der ersten Schwenkachse 16 und der zweiten Schwenkachse 17 sowie der Verbindungslinie zwischen der dritten Schwenkachse 18 und der vierten Schwenkachse 19. Dies bedeutet, dass die Hebelelementverbindung 14 parallel zu dem Fahrzeugsitzoberteil 2 und dem Fahrzeugsitzunterteil 3 ausgebildet ist.

Besonders bevorzugt sind das erste Hebelelement 7, das zweite Hebelelement 8, das dritte Hebelelement 9 und das vierte Hebelelement 10 gleich lang ausgebildet, das heißt, dass die Längen der Verbindungslinien zwischen den jeweiligen Schwenkachsen der Hebelelemente gleich lang sind.

Weiter ist es bevorzugt, wenn die Verbindungslinie zwischen der dritten Schwenkachse 18 und der gemeinsamen Schwenkachse 22 die gleiche Länge aufweist wie die Verbindungslinie zwischen der ersten Schwenkachse 16 und der zweiten Schwenkachse 17.

Ebenso ist es dabei vorteilhaft, wenn die Verbindungslinie zwischen der gemeinsamen Schwenkachse 22 und der siebten Schwenkachse 28 die gleiche Länge aufweist wie die Verbindungslinie zwischen der siebten Schwenkachse 28 und der zweiten Schwenkachse 17. Entsprechend ist die Länge der Verbindungslinie zwischen der gemeinsamen Schwenkachse 22 und der sechsten Schwenkachse 21 gleich der Länge der Verbindungslinie einer des ersten, zweiten, dritten oder vierten Hebelelements.

Die Längen der Verbindungslinien sollten derart ausgebildet sein, so dass eine vollständige Einfederung bzw. eine minimale Auslenkung möglich ist.

Hierdurch kann gemäß der Ausführungsform der Figuren 2A-2C, bei welcher die Hebelelemente 7, 8, 9, 10, 11, 12, 13 in ihrer Länge nicht veränderbar sind, das heißt, der Abstand zwischen den jeweiligen Schwenkachsen der Hebelelemente ist nicht veränderbar, ist eine Führung des Fahrzeugsitzoberteils 2 gegenüber dem Fahrzeugsitzunterteil 3 lediglich in vertikaler Richtung bzw. in Höhenrichtung H realisiert. Die Vorteile einer Parallelogrammfederung, insbesondere der geringe Platzbedarf, sind jedoch weiterhin vorhanden.

Zur Federung des Fahrzeugsitzoberteils 2 bei einer Auslenkung des Fahrzeugsitzoberteils 2 ist darüber hinaus eine Federungseinheit 23 vorgesehen, welche beispielsweise als eine Luftfeder oder auch als eine mechanische Feder realisiert sein kann.

Insbesondere ist die dritte Schwenkachse 18 oberhalb der ersten Schwenkachse 16 und die vierte Schwenkachse 19 oberhalb der zweiten Schwenkachse 17 angeordnet, in Höhenrichtung H gesehen, wobei insbesondere kein Versatz in der Längsrichtung L nach vorne oder hinten vorgesehen ist.

In der Figur 2B ist die Führungseinrichtung 4 in einer maximal ausgelenkten Position P2 dargestellt, wobei die Elemente die gleichen Bezugszeichen aufweisen.

In der Figur 2C ist die Führungseinrichtung 4 in einer minimal ausgelenkten Position P3 und in einem Querschnitt für eine verbesserte Darstellung dargestellt, wobei auch hier die Elemente die gleichen Bezugszeichen aufweisen.

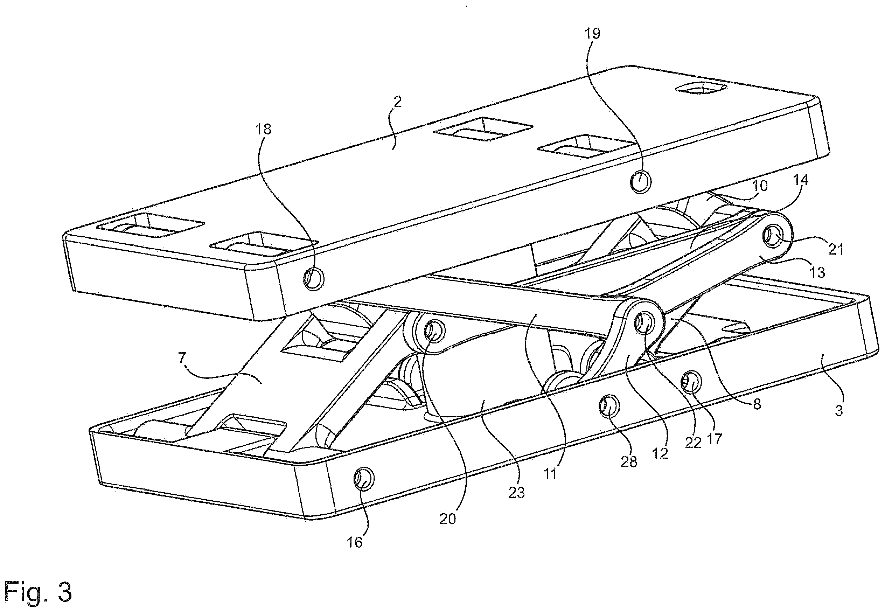

In der Figur 3 ist die Führungseinrichtung 4 der Figur 2A in einer schematischen und perspektivischen Ansicht dargestellt.

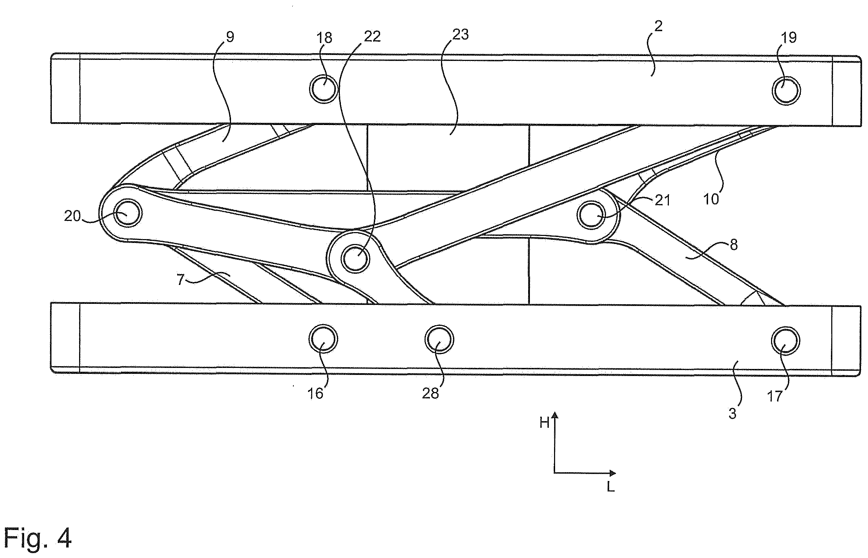

Die Figur 4 zeigt eine Führungseinrichtung 4 mit den gleichen Bauteilen wie die Führungseinrichtung der Figuren 2A-2C, jedoch sind die Hebelelemente der ersten Anordnung 5 und der zweiten Anordnung anders orientiert, das heißt, dass das erste Hebelelement 7 und das zweite Hebelelement 8 in Längsrichtung L nach hinten und das dritte Hebelelement 9 und das vierte Hebelelement 10 in Längsrichtung L nach vorne verlaufend angeordnet sind.

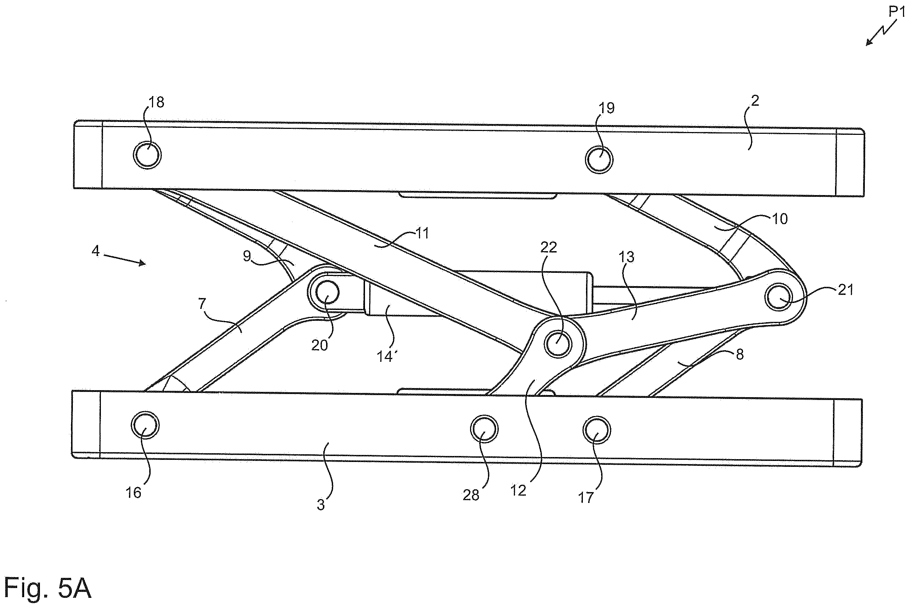

In den Figuren 5A-5C ist eine weitere Ausführungsform der vorliegenden Erfindung gezeigt, nämlich derart, dass die in ihrer Länge zunächst nicht veränderbare Hebelelementverbindung 14 durch eine ihrer Länge veränderbare Hebelelementverbindung 14' ersetzt wurde.

Insbesondere kann die veränderbare Hebelelementverbindung 14' als ein Dämpferelement ausgebildet sein.

In der Figur 5A ist wiederum die Führungseinrichtung 4 in der nicht-ausgelenkten Position P1 zu sehen, mit denselben Elementen wie in den zuvor gezeigten Figuren, jedoch mit der Ersetzung der Hebelelementverbindung 14 durch die veränderbare Hebelelementverbindung 14'.

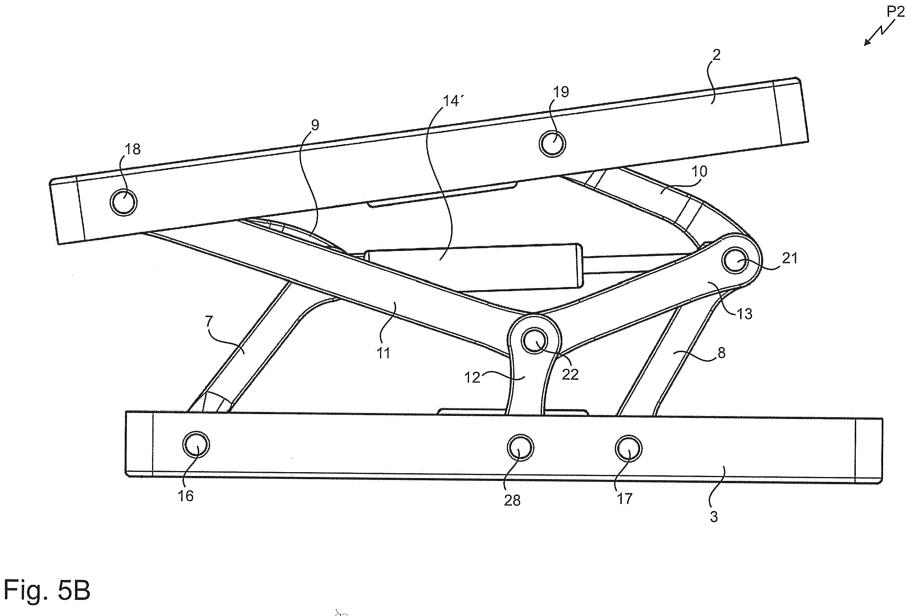

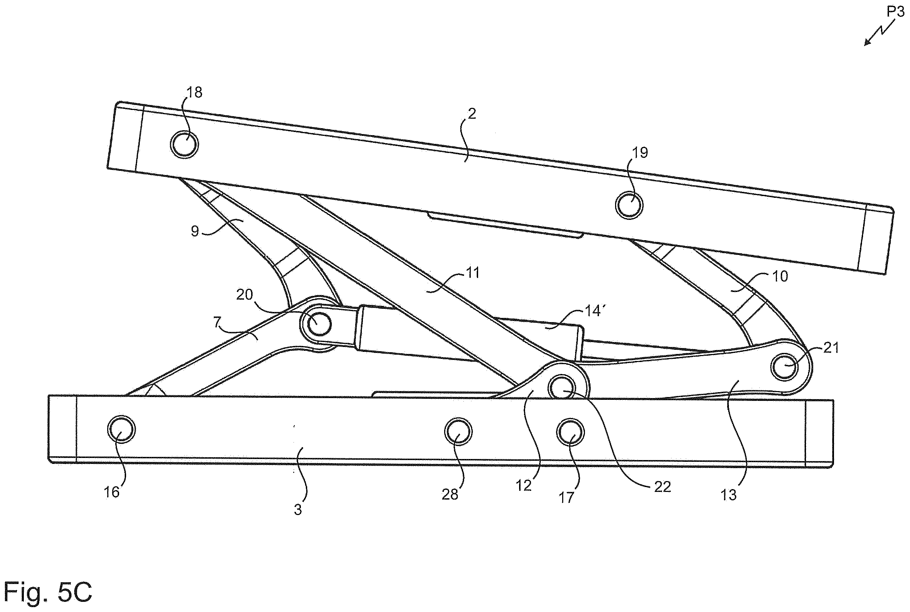

Die Figur 5B zeigt dabei die Führungseinrichtung 4 in der maximal ausgelenkten Position P2 und die Figur 5C die Führungseinrichtung 4 in der minimal ausgelenkten Position P3.

Dadurch, dass die Hebelelementverbindung 14' in ihrer Länge veränderbar ist, ergibt sich insgesamt für die Führung des Fahrzeugsitzoberteils 2 gegenüber dem Fahrzeugsitzunterteil 3 eine neue Situation bei Auslenkung des Fahrzeugsitzoberteils 2.

Zusätzlich zu der Bewegung bzw. Federung in vertikaler Richtung bzw. Höhenrichtung H wird eine Rotation des Fahrzeugsitzoberteils 2 hervorgerufen durch die Längenänderung der Hebelelementverbindung 14', wobei eine Längenänderung gleichbedeutend ist mit einer Veränderung des Abstandes zwischen der fünften Schwenkachse 20 und der sechsten Schwenkachse 21. Hierdurch und durch die Zwangsführung durch die Stabilisierungseinrichtung 15 ergeben sich verschieden Bewegungen innerhalb der Führungseinrichtung 4.

Durch die Rotation des Fahrzeugsitzoberteils 2 ergibt sich entsprechend auch ein Versatz in Längsrichtung L nach vorne bzw. nach hinten, abhängig von der Art der Bewegung bzw. Auslenkung des Fahrzeugsitzoberteils 2.

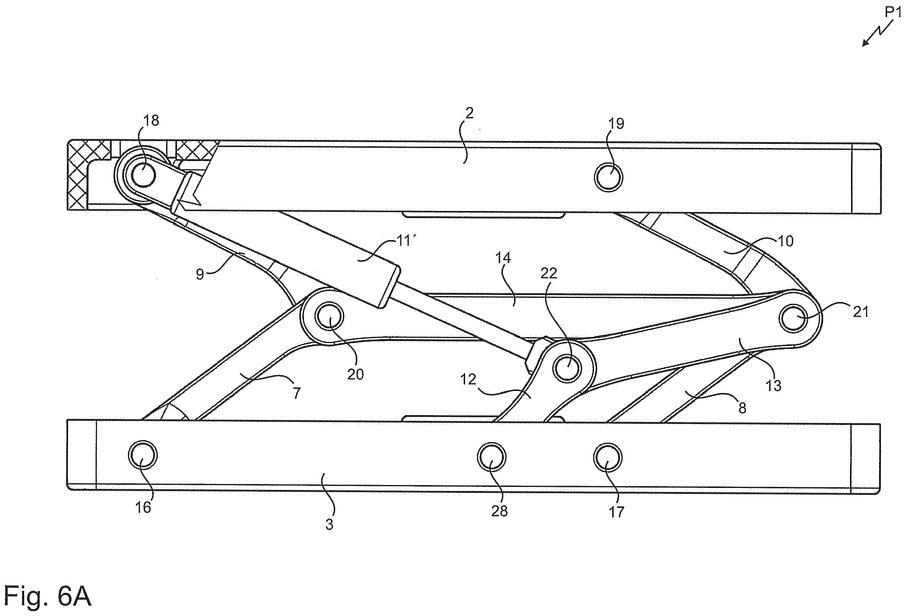

Die Figuren 6A-6C zeigen eine weitere Ausführungsform, bei welcher das fünfte Hebelelement 11, welches gemäß den Figuren 2A-2C nicht in seiner Länge veränderbar, durch ein in seiner Länge veränderbares Hebelelement 11' ersetzt.

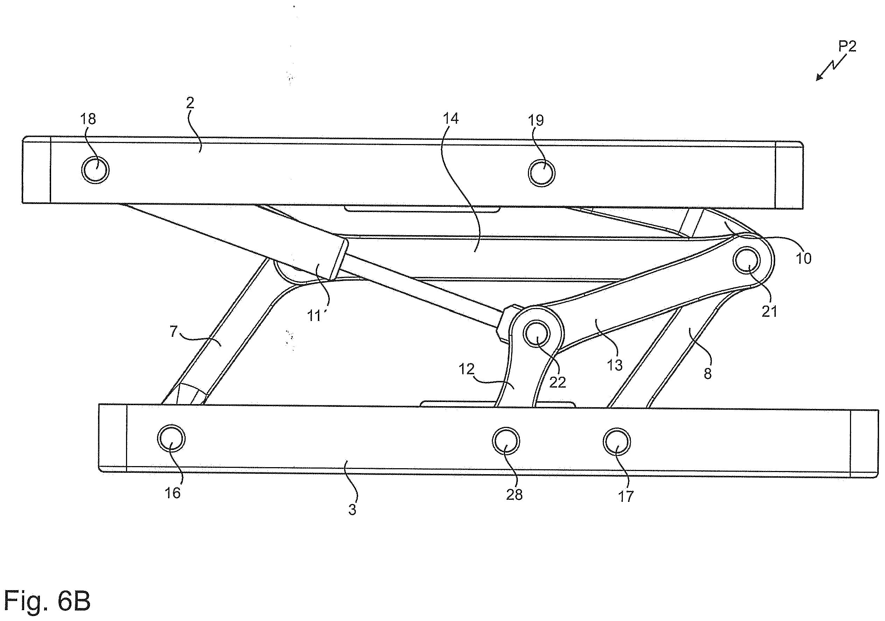

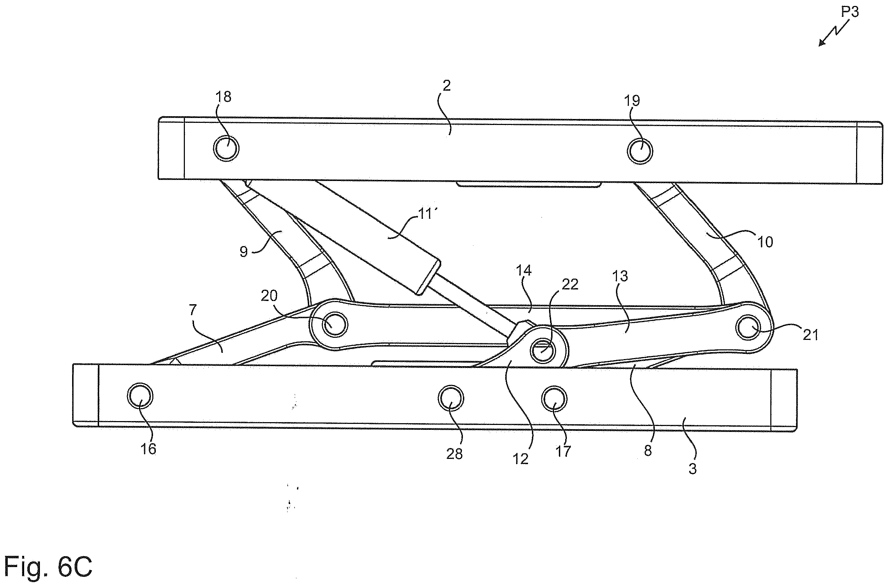

Die Figur 6A zeigt die Führungseinrichtung in der nicht-ausgelenkten Position P1, die Figur 6B in der maximal ausgelenkten Position P2 und die Figur 6C in der minimal ausgelenkten Position P3.

Durch die Ersetzung des fünften Hebelelements 11 ist eine gegenüber der Ersetzung der Hebelelementverbindung 14 eine andere Bewegung des Fahrzeugsitzoberteils 2 zu erkennen. Wie in den Figuren 6B und 6C zu erkennen ist, wird zusätzlich zu Bewegung in vertikaler Richtung bzw. Höhenrichtung H ein Versatz in Längsrichtung L nach vorne bzw. nach hinten erzeugt, jedoch im Vergleich zu den Figuren 5A-5C keine Rotation, sondern eine Translation des Fahrzeugsitzoberteils 2 hervorgerufen.

Insgesamt werden durch Ersetzung der Hebelelementverbindung 14 oder des fünften Hebelelements 11 durch längenveränderbare Äquivalente zusätzlich zu der Bewegung in Höhenrichtung H eine Bewegung in Längsrichtung L hervorgerufen, sodass bei Verwendung geeigneter Federungselemente bzw. Dämpfungselemente auch eine Längshorizontalfederung realisiert werden kann.

Insgesamt ist es auch vorstellbar, dass jedes Hebelelement 7, 8, 9, 10, 11, 12, 13 sowie die Hebelelementverbindung 14 sowie der Abstand zwischen den Schwenkachsen 16, 17 und den Schwenkachsen 18, 19 in ihrer Länge veränderbar ausgebildet sein können. Es sind auch Kombinationen denkbar von Hebelelementen, die in ihrer Länge veränderbar sind, beispielsweise das fünfte Hebelelement 12 und die Hebelelementverbindung 14, oder jede andere Kombination der Hebelelemente 7, 8, 9, 10, 11, 12, 13 und der Hebelelementverbindung 14. Auch ist es denkbar, dass anstelle des fünften Hebelelements 11 jedes andere Hebelelement in seiner Länge veränderbar ausgebildet sein kann.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Fahrzeugsitzoberteil
- 3: Fahrzeugsitzunterteil
- 4: Führungseinrichtung
- 5: erste Anordnung
- 6: zweite Anordnung
- 7: erstes Hebelelement
- 8: zweites Hebelelement
- 9: drittes Hebelelement
- 10: viertes Hebelelement
- 11: fünftes Hebelelement
- 11': längenveränderbares fünftes Hebelelement
- 12: sechstes Hebelelement
- 13: siebtes Hebelelement
- 14: Hebelelementverbindung
- 14': längenveränderbare Hebelelementverbindung
- 15: Stabilisierungseinrichtung
- 16: erste Schwenkachse
- 17: zweite Schwenkachse
- 18: dritte Schwenkachse
- 19: vierte Schwenkachse
- 20: fünfte Schwenkachse
- 21: sechste Schwenkachse
- 22: gemeinsame Schwenkachse
- 23: Federungseinheit
- 24: Sitzteil
- 25: Rückenlehne
- 26: erster Endbereich
- 27: zweiter Endbereich
- 28: siebte Schwenkachse
- P1: nicht-ausgelenkte Position
- P2: maximal ausgelenkte Position
- P3: minimal ausgelenkte Position
- B: Breitenrichtung
- L: Längsrichtung
- H: Höhenrichtung

## Patentansprüche

1. Fahrzeugsitz (1) mit einem Fahrzeugsitzoberteil (2), einem Fahrzeugsitzunterteil (3) und einer Führungseinrichtung (4) zum Führen des Fahrzeugsitzoberteils (2) gegenüber dem Fahrzeugsitzunterteil (3) bei einer Auslenkung des Fahrzeugsitzoberteils (2) relativ zu dem Fahrzeugsitzunterteil (3),
wobei die Führungseinrichtung (4) umfasst:
- Eine erste Anordnung (5) mit einem ersten Hebelelement (7), einem zweiten Hebelelement (8) und einer Hebelelementverbindung (14), wobei das erste Hebelelement (7) und das zweite Hebelelement (8) in einer Längsrichtung (L) nach vorne verlaufend angeordnet sind;
- Eine zweite Anordnung (6) mit einem dritten Hebelelement (9), einem vierten Hebelelement (10) und der Hebelelementverbindung (14), wobei das dritte Hebelelement (9) und das vierte Hebelelement (10) in einer Längsrichtung (L) nach hinten verlaufend angeordnet sind;
**dadurch gekennzeichnet, dass**
die Führungseinrichtung (4) weiterhin umfasst:
- Eine Stabilisierungseinrichtung (15) mit einem fünften Hebelelement (11), einem sechsten Hebelelement (12) und einem siebten Hebelelement (13), welche mittels einer gemeinsamen Schwenkachse (22) schwenkbar verbunden sind;
wobei das fünfte Hebelelement (11) mit dem Fahrzeugsitzoberteil (2), das sechste Hebelelement (12) mit dem Fahrzeugsitzunterteil (3) und das siebte Hebelelement (13) mit der Hebelelementverbindung (14) schwenkbar verbunden sind.

2. Fahrzeugsitz (1) nach Anspruch 1,
**dadurch gekennzeichnet, dass**
das erste Hebelelement (7) mittels einer ersten Schwenkachse (16) und das zweite Hebelelement (8) mittels einer zweiten Schwenkachse (17) mit dem Fahrzeugsitzunterteil (3) schwenkbar verbunden sind und das dritte Hebelelement (9) mittels einer dritten Schwenkachse (18) und das vierte Hebelelement (10) mittels einer vierten Schwenkachse (19) schwenkbar mit dem Fahrzeugsitzoberteil (2) verbunden sind.

3. Fahrzeugsitz (1) nach einem der Ansprüche 1-2,
**dadurch gekennzeichnet, dass**
das zweite Hebelelement (8), das vierte Hebelelement (10) und die Hebelelementverbindung (14) mittels einer sechsten Schwenkachse (21) und das erste Hebelelement (7), das dritte Hebelelement (9) und die Hebelelementverbindung (14) mittels einer fünften Schwenkachse (20) schwenkbar verbunden sind, und wobei das siebte Hebelelement (13) mittels der sechsten Schwenkachse (21) schwenkbar angeordnet ist.

4. Fahrzeugsitz (1) nach Anspruch 2,
**dadurch gekennzeichnet, dass**
das fünfte Hebelelement (11) mittels der dritten Schwenkachse (18) mit dem Fahrzeugsitzoberteil (2) schwenkbar verbunden ist.

5. Fahrzeugsitz (1) nach einem der Ansprüche 1-4,
**dadurch gekennzeichnet, dass**
das sechste Hebelelement (12) mittels einer siebten Schwenkachse (28) schwenkbar mit dem Fahrzeugsitzunterteil (3) verbunden ist.

6. Fahrzeugsitz (1) nach einem der Ansprüche 1-5,
**dadurch gekennzeichnet, dass**
eine Federungseinheit (23) vorgesehen ist, welche mit dem Fahrzeugsitzoberteil (2) und dem Fahrzeugsitzunterteil (3) verbunden ist.

7. Fahrzeugsitz (1) nach Anspruch 2,
**dadurch gekennzeichnet, dass**
in einer nicht-ausgelenkten Position (P1) des Fahrzeugsitzoberteils (2) in einer Höhenrichtung (H) gesehen die dritte Schwenkachse (18) über der ersten Schwenkachse (16) und die vierte Schwenkachse (19) über der zweiten Schwenkachse (17) angeordnet ist.

8. Fahrzeugsitz (1) nach Anspruch 5,
**dadurch gekennzeichnet, dass**
die siebte Schwenkachse (28) in Längsrichtung (L) gesehen zwischen der ersten Schwenkachse (16) und der zweiten Schwenkachse (17) angeordnet ist.

9. Fahrzeugsitz (1) nach einem der Ansprüche 1-8,
**dadurch gekennzeichnet, dass**
die Hebelelementverbindung (14) derart ausgebildet ist, dass die Hebelelementverbindung (14) durch die Auslenkung des Fahrzeugsitzoberteils (2) in seiner Länge veränderbar ist.

10. Fahrzeugsitz (1) nach einem der Ansprüche 1-8,
**dadurch gekennzeichnet, dass**
das fünfte Hebelelement (11) derart ausgebildet ist, dass das fünfte Hebelelement (11) durch die Auslenkung des Fahrzeugsitzoberteils (2) in seiner Länge veränderbar ist.

## Claims

1. Vehicle seat (1) comprising a vehicle seat top part (2), a vehicle seat bottom part (3) and a guide device (4) for guiding the vehicle seat top part (2) with respect to the vehicle seat bottom part (3) when the vehicle seat top part (2) is deflected relative to the vehicle seat bottom part (3),
wherein the guide device (4) comprises:
- a first assembly (5) having a first lever element (7), a second lever element (8) and a lever element connector (14), the first lever element (7) and the second lever element (8) being arranged so as to extend forwards in a longitudinal direction (L);
- a second assembly (6) having a third lever element (9), a fourth lever element (10) and the lever element connector (14), the third lever element (9) and the fourth lever element (10) being arranged so as to extend backwards in a longitudinal direction (L);
**characterized in that**
the guide device (4) further comprises:
- a stabilization device (15) having a fifth lever element (11), a sixth lever element (12) and a seventh lever element (13), which are pivotally connected by means of a shared pivot axis (22);
wherein the fifth lever element (11) is pivotally connected to the vehicle seat top part (2), the sixth lever element (12) being pivotally connected to the vehicle seat bottom part (3) and the seventh lever element (13) being pivotally connected to the lever element connector (14).

2. Vehicle seat (1) according to claim 1,
**characterized in that**
the first lever element (7) is pivotally connected to the vehicle seat bottom part (3) by means of a first pivot axis (16) and the second lever element (8) is pivotally connected to said vehicle seat bottom part by means of a second pivot axis (17), and the third lever element (9) is pivotally connected to the vehicle seat top part (2) by means of a third pivot axis (18) and the fourth lever element (10) is pivotally connected to said vehicle seat top part by means of a fourth pivot axis (19).

3. Vehicle seat (1) according to any of claims 1-2,
**characterized in that**
the second lever element (8), the fourth lever element (10) and the lever element connector (14) are pivotally connected by means of a sixth pivot axis (21) and the first lever element (7), the third lever element (9) and the lever element connector (14) are pivotally connected by means of a fifth pivot axis (20), and the seventh lever element (13) being pivotally arranged by means of the sixth pivot axis (21).

4. Vehicle seat (1) according to claim 2,
**characterized in that**
the fifth lever element (11) is pivotally connected to the vehicle seat top part (2) by means of the third pivot axis (18).

5. Vehicle seat (1) according to any of claims 1-4,
**characterized in that**
the sixth lever element (12) is pivotally connected to the vehicle seat bottom part (3) by means of a seventh pivot axis (28).

6. Vehicle seat (1) according to any of claims 1-5,
**characterized in that**
a suspension unit (23) is provided, which is connected to the vehicle seat top part (2) and the vehicle seat bottom part (3).

7. Vehicle seat (1) according to claim 2,
**characterized in that**
when the vehicle seat top part (2) is in a non-deflected position (P1), the third pivot axis (18) is arranged above the first pivot axis (16) and the fourth pivot axis (19) is arranged above the second pivot axis (17) when viewed in a height direction (H).

8. Vehicle seat (1) according to claim 5,
**characterized in that**
when viewed in the longitudinal direction (L), the seventh pivot axis (28) is arranged between the first pivot axis (16) and the second pivot axis (17).

9. Vehicle seat (1) according to any of claims 1-8,
**characterized in that**
the lever element connector (14) is designed such that the length of the lever element connector (14) can be changed by the deflection of the vehicle seat top part (2).

10. Vehicle seat (1) according to any of claims 1-8,
**characterized in that**
the fifth lever element (11) is designed such that the length of the fifth lever element (11) can be changed by the deflection of the vehicle seat top part (2).

## Revendications

1. Siège de véhicule (1) comportant une partie supérieure de siège de véhicule (2), une partie inférieure de siège de véhicule (3) et un dispositif de guidage (4) pour le guidage de la partie supérieure de siège de véhicule (2) par rapport à la partie inférieure de siège de véhicule (3) lors d'une déviation de la partie supérieure de siège de véhicule (2) par rapport à la partie inférieure de siège de véhicule (3), dans lequel le dispositif de guidage (4) comporte :
- un premier ensemble (5) comportant un premier élément levier (7), un deuxième élément levier (8) et un élément (14) de liaison d'éléments leviers, le premier élément levier (7) et le deuxième élément levier (8) étant disposés s'étendant vers l'avant dans une direction longitudinale (L) ;
- un second ensemble (6) comportant un troisième élément levier (9), un quatrième élément levier (10) et l'élément (14) de liaison d'éléments leviers, le troisième élément levier (9) et le quatrième élément levier (10) étant disposés de façon à s'étendre vers l'arrière dans une direction longitudinale (L),
**caractérisé par le fait que**
le dispositif de guidage (4) comporte en outre :
- un dispositif de stabilisation (15) comportant un cinquième élément levier (11), un sixième élément levier (12) et un septième élément levier (13), lesquels sont reliés de façon pivotante au moyen d'un axe de pivotement commun (22) ; le cinquième élément levier (11) étant relié de façon pivotante à la partie supérieure de siège de véhicule (2), le sixième élément levier (12) étant relié de façon pivotante à la partie inférieure de siège de véhicule (3) et le septième élément levier (13) étant relié de façon pivotante à l'élément (14) de liaison d'éléments leviers.

2. Siège de véhicule (1) selon la revendication 1,
**caractérisé par le fait que**
le premier élément levier (7) est relié de façon pivotante à la partie inférieure de siège de véhicule (3) au moyen d'un premier axe de pivotement (16) et le deuxième élément levier (17) est relié de façon pivotante à la partie inférieure de siège de véhicule (3) au moyen d'un deuxième axe de pivotement (17) et le troisième élément levier (9) est relié de façon pivotante à la partie supérieure de siège de véhicule (2) au moyen d'un troisième axe de pivotement (18) et le quatrième élément levier (10) est relié de façon pivotante à la partie supérieure de siège de véhicule (2) au moyen d'un quatrième axe de pivotement (19).

3. Siège de véhicule (1) selon l'une des revendications 1 ou 2,
**caractérisé par le fait que**
le deuxième élément levier (8), le quatrième élément levier (10) et l'élément (14) de liaison d'éléments leviers sont reliés de façon pivotante au moyen d'un sixième axe de pivotement (21) et le premier élément levier (7), le troisième élément levier (9) et l'élément (14) de liaison d'éléments leviers sont reliés de manière pivotante au moyen d'un cinquième axe de pivotement (20), et dans lequel le septième élément levier (13) est disposé de façon pivotante au moyen du sixième axe de pivotement (21).

4. Siège de véhicule (1) selon la revendication 2,
**caractérisé par le fait que**
le cinquième élément levier (11) est relié de façon pivotante à la partie supérieure de siège de véhicule (2) au moyen du troisième axe de pivotement (18).

5. Siège de véhicule (1) selon l'une des revendications 1 à 4,
**caractérisé par le fait que**
le sixième élément levier (12) est relié de façon pivotante à la partie inférieure de siège de véhicule (3) au moyen d'un septième axe de pivotement (28).

6. Siège de véhicule (1) selon l'une des revendications 1 à 5,
**caractérisé par le fait qu'**
une unité de suspension (23) est prévue, laquelle est reliée à la partie supérieure de siège de véhicule (2) et à la partie inférieure de siège de véhicule (3).

7. Siège de véhicule (1) selon la revendication 2,
**caractérisé par le fait que**
dans une position non déviée (P1) de la partie supérieure de siège de véhicule (2), vu dans une direction de la hauteur (H), le troisième axe de pivotement (18) est disposé au-dessus du premier axe de pivotement (16) et le quatrième axe de pivotement (19) est disposé au-dessus du deuxième axe de pivotement (17).

8. Siège de véhicule (1) selon la revendication 5,
**caractérisé par le fait que**
le septième axe de pivotement (28) est disposé vu dans la direction longitudinale (L) entre le premier axe de pivotement (16) et le deuxième axe de pivotement (17).

9. Siège de véhicule (1) selon l'une des revendications 1 à 8,
**caractérisé par le fait que**
l'élément (14) de liaison d'éléments leviers est conçu de telle sorte que l'élément (14) de liaison d'éléments leviers est modifiable dans sa longueur par la déviation de la partie supérieure de siège de véhicule (2).

10. Siège de véhicule (1) selon l'une des revendications 1 à 8,
**caractérisé par le fait que**
le cinquième élément levier (11) est conçu de telle sorte que le cinquième élément levier (11) est modifiable dans sa longueur par la déviation de la partie supérieure de siège de véhicule (2).
